# EUROPEAN PATENT SPECIFICATION

(11) **EP 2 775 607 B1**
(45) Date of publication and mention of the grant of the patent: **21.08.2019**
(21) Application number: 14158033.2
(22) Date of filing: 06.03.2014
(51) Int. Cl.: B60L 50/40

(54) **Motor control unit**
Motorsteuereinheit
Unité de commande de moteur

(30) Priority: 08.03.2013 JP 2013046928
(43) Date of publication of application: 10.09.2014
(73) Proprietor: JTEKT Corporation, Osaka-shi Osaka 542-8502 (JP)
(72) Inventor: UCHIDA, Nobuhiro, Osaka-shi,, Osaka 542-8502 (JP)
(74) Representative: TBK

(56) References cited:
- US-B1- 7 268 521

## Description

### BACKGROUND OF THE INVENTION

### 1. Field of the Invention

The invention relates to a motor control unit.

### 2. Description of the Related Art

In general, in a vehicle in which a motor is used as a driving source for vehicle travelling, such as an electric vehicle or a hybrid vehicle, a control unit for the motor is provided with a switch, such as a power supply relay, disposed at an intermediate portion of a power supply line (electric power supply path) that connects a driving circuit of the control unit and an external power supply to each other. When the switch is turned on and thus the power supply line is brought into conduction, electric power is supplied to the motor. Further, in such a motor control unit, a capacitor used to, for example, smooth an electric current is disposed on an intermediate portion of the power supply line.

From the viewpoint of safety or the like, after an ignition switch is turned off and the switch is turned off to bring the power supply line out of conduction, electric charges stored in the capacitor need to be discharged from the capacitor. Some conventional motor control units are provided with a discharge circuit for discharging electric charges from a capacitor. However, provision of such a discharge circuit inevitably increases the size of the motor control unit.

Document US 7 268 521 B1 discloses a motor control unit to discharge a smoothing capacitor. In particular, an electric drive system is described, which comprises a power source that provides power to an electric motor through an electric motor control. Discharging of stored capacitor energy of a capacitor coupled between a power source and an electric motor controller of the system is provided by controlling energy transfer from the capacitor to the electric motor.

For example, Japanese Patent Application Publication No. 11-89264 (JP 11-89264 A) describes a motor control unit that carries out electric discharge from a capacitor by causing electric charges stored in the capacitor to flow to a motor after a switch is turned off to bring an power supply line out of conduction. Specifically, JP 11-89264 A describes a method of carrying out electric discharge by supplying electric power based on the electric charges stored in the capacitor to the motor such that torque is generated, and a method of carrying out electric discharge by supplying electric power to the motor such that torque is not generated. The former method has an advantage that it is possible to carry out electric discharge while suppressing resistance heating, whereas the latter method has an advantage that it is possible to carry out electric discharge without rotating the motor.

In a case where it is not preferable to rotate a motor after a switch is turned off to bring a power supply line out of conduction, such as a case where a motor is used as a driving source for vehicle travelling, electric discharge is carried out by the latter method described in JP 11-89264 A, in which electric power is supplied to the motor such that torque is not generated. Thus, resistance heating is likely to be a problem.

Meanwhile, some vehicles such as electric vehicles and hybrid vehicles are provided with an interrupting mechanism, such as a clutch, which allows or interrupts torque transmission and which is disposed between a motor serving as a driving source and a wheel. In a case where the interrupting mechanism is disposed between the motor and a driven body that forms a load as described above, by interrupting torque transmission between the motor and the driven body when carrying out electric discharge from a capacitor, it is possible to carry out electric discharge from the capacitor while suppressing resistance heating, according to the former method described in JP 11-89264 A, in which electric power is supplied to the motor such that torque is generated.

However, if electric power is supplied to the motor in a state where the clutch, which is the interrupting mechanism, is disengaged and thus the motor and the driven body are disconnected from each other to interrupt torque transmission, there is a possibility that the motor may rotate at an excessively high angular velocity (rotation angular velocity), unlike in a case where electric power is supplied to the motor in a state where the clutch is engaged and thus the motor and the driven body are connected to each other to allow torque transmission. As a result, there is a possibility that an excessive burden may be placed on the motor itself and its peripheral components such as a bearing. In this regard, there is still room for improvement.

### SUMMARY OF THE INVENTION

One object of the invention is to provide a motor control unit that is able to carry out electric discharge from a capacitor while suppressing resistance heating and preventing an excessive burden from being placed on a motor and its peripheral components.

An aspect of the invention relates to a motor control unit that controls an operation of a motor connected to a driven body via a clutch that allows or interrupts torque transmission between the motor and the driven body. The motor control unit includes: a control circuit that outputs a motor control signal for controlling the operation of the motor; a driving circuit that supplies driving electric power to the motor based on the motor control signal; and a capacitor provided at an intermediate portion of a power supply line that connects the driving circuit and an external power supply to each other. The control circuit carries out electric discharge from the capacitor by supplying electric power generated by electric charges stored in the capacitor to the motor such that torque is generated by the motor, with torque transmission between the motor and the driven body interrupted by the clutch, after a switch provided at an intermediate portion of the power supply line is turned off. The control circuit controls electric power supply to the motor such that an angular velocity of the motor becomes less than or equal to a prescribed angular velocity, at the time of the electric discharge from the capacitor.

According to the aspect described above, because the electric power is supplied to the motor such that torque is generated by the motor, it is possible to carry out electric discharge from the capacitor while suppressing resistance heating. In the aspect described above, when electric discharge from the capacitor is carried out, the angular velocity of the motor is controlled so as to become less than or equal to the prescribed angular velocity. Therefore, even if electric power is supplied to the motor with torque transmission between the motor and the driven body interrupted, that is, with no load placed on the motor, the motor is prevented from rotating an excessively high angular velocity. In this way, it is possible to prevent an excessive burden from being placed on the motor itself and its peripheral components.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a block diagram illustrating the schematic configuration of a motor control unit and its peripheral components;
FIG. 2 is a block diagram illustrating the schematic configuration of a microcomputer; and
FIG. 3 is a block diagram illustrating the schematic configuration of a current command value computation unit.

### DETAILED DESCRIPTION OF EMBODIMENTS

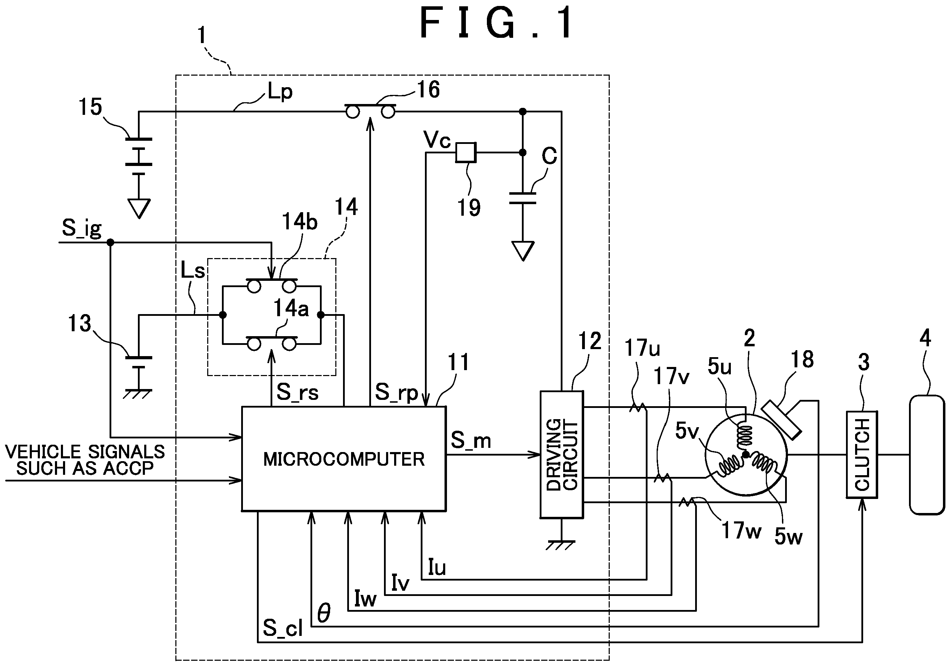

Hereinafter, a motor control unit 1 according to an embodiment of the invention will be described with reference to the accompanying drawings. The motor control unit 1 illustrated in FIG. 1 is used to control the operation of a motor 2 used as a driving source for travelling of an electric vehicle, a hybrid vehicle, or the like. The motor 2 is connected to a wheel 4, which is an example of a driven body, via a clutch 3 that may function as an interrupting mechanism. When the clutch 3 is engaged, the motor 2 and the wheel 4 are connected to each other to allow torque transmission. On the other hand, when the clutch 3 is disengaged, the motor 2 and the wheel 4 are disconnected from each other to interrupt torque transmission. As the motor 2 in the present embodiment, a brushless motor is adopted.

As illustrated in FIG. 1, the motor control unit 1 includes a microcomputer 11 that may function as a control circuit and that outputs a motor control signal S_m, and a driving circuit 12 that supplies driving electric power to the motor 2 on the basis of the motor control signal S_m output from the microcomputer 11. As the driving circuit 12 in the present embodiment, a known PWM inverter is adopted. In such a PWM inverter, a pair of switching elements (for example, FETs) connected in series is regarded as a basic unit. The PWM inverter is formed by connecting multiples pairs of the switching elements in parallel such that the pairs of switching elements respectively correspond to a U-phase motor coil 5u, a V-phase motor coil 5v, and a W-phase motor coil 5w. The motor control signal S_m output from the microcomputer 11 is used to define the on-off state of each switching element. Each switching element is turned on or off in response to the motor control signal S_m and thus the energization patterns of the U-phase motor coil 5u, the V-phase motor coil 5v, and the W-phase motor coil 5w are switched. In this way, three-phase driving electric power is output to the motor 2.

The microcomputer 11 is connected to a power supply (battery) 13 for control (hereinafter, referred to as "control power supply 13") through a power supply line Ls. A relay circuit 14 formed by connecting, in parallel, control relays 14a, 14b, each of which is a mechanical relay, is provided at an intermediate portion of the power supply line Ls. Thus, when at least one of the control relays 14a, 14b is turned on, the power supply line Ls is brought into conduction, whereas when both the control relays 14a, 14b are turned off, the power supply line Ls is brought out of conduction. When the power supply line Ls is brought into conduction, the microcomputer 11 is actuated by the driving electric power supplied from the control power supply 13.

The driving circuit 12 is connected to a power supply (battery) 15 for driving (hereinafter, referred to as "driving power supply"), which may function as an external power supply, through a power supply line Lp. A capacitor C used to smooth an electric current supplied to the power supply line Lp is connected to the power supply line Lp. A driving relay 16, which is a mechanical relay and which may function as a switch, is disposed on the power supply line Lp at a position closer to the driving power supply 15 than the capacitor C. Thus, when the driving relay 16 is turned on, the power supply line Lp is brought into conduction, whereas when driving relay 16 is turned off, the power supply line Lp is brought out of conduction. When the power supply line Lp is brought into conduction, the driving circuit 12 is able to supply driving electric power based on the voltage of the power supply for driving 15 to the motor 2.

Vehicle signals such as an accelerator position signal ACCP indicating the depression amount of an accelerator pedal (not illustrated) of the vehicle, and an ignition signal S_ig indicating the on-off state of an ignition switch (IG) of the vehicle are input into the microcomputer 11. In addition, signals indicating three-phase current values Iu, Iv, Iw of the motor 2, which are respectively detected by current sensors 17u, 17v, 17w, a rotation angle θ of the motor 2, which is detected by a rotation angle sensor 18, and a capacitor voltage Vc of the capacitor C, which is detected by a voltage sensor 19, are input into the microcomputer 11.

The microcomputer 11 outputs the motor control signal S_m, relay control signals S_rs, S_rp, and a clutch control signal S_cl on the basis of the received state quantities, and controls the operations of the motor 2, the clutch 3, the control relay 14a, and the driving relay 16. The ignition signal S_ig is directly input into the control relay 14b. The control relay 14b operates to be in an on-state when the ignition signal S_ig indicates that the ignition switch is in an on-state (on-operation), and operates to be in an off-state when the ignition signal S_ig indicates that the ignition switch is in an off-state (off-operation).

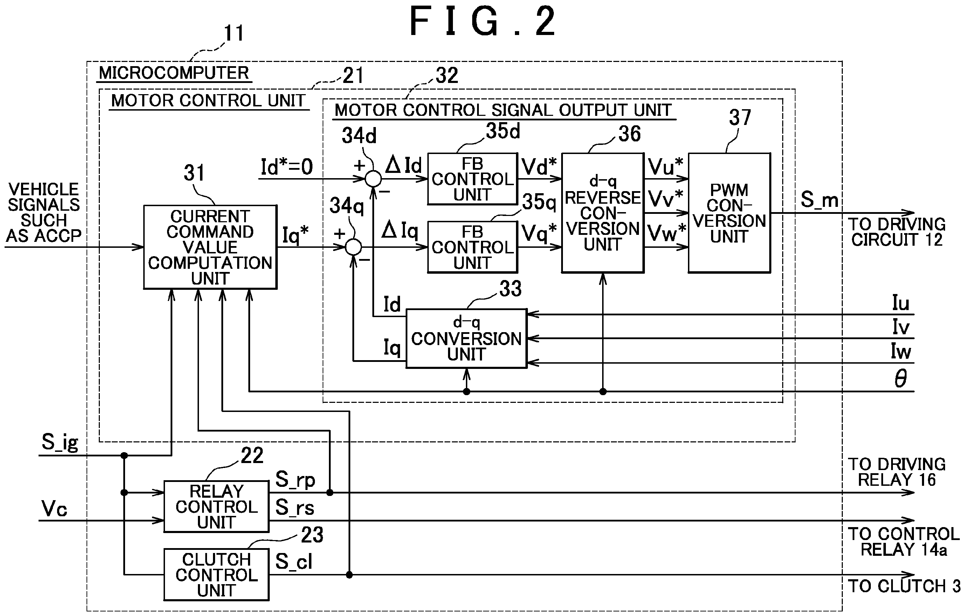

Specifically, as illustrated in FIG. 2, the microcomputer 11 includes a motor control unit 21 that outputs the motor control signal S_m, a relay control unit 22 that outputs the relay control signals S_rs, S_rp, and a clutch control unit 23 that outputs the clutch control signal S_cl.

The vehicle signals such as the accelerator position signal ACCP are input into the motor control unit 21. The motor control unit 21 includes a current command value computation unit 31 that computes a current command value (a q-axis current command value Iq*) that is a target value of the electric power supply to the motor 2, and a motor control signal output unit 32 that outputs the motor control signal S_m on the basis of the current command value.

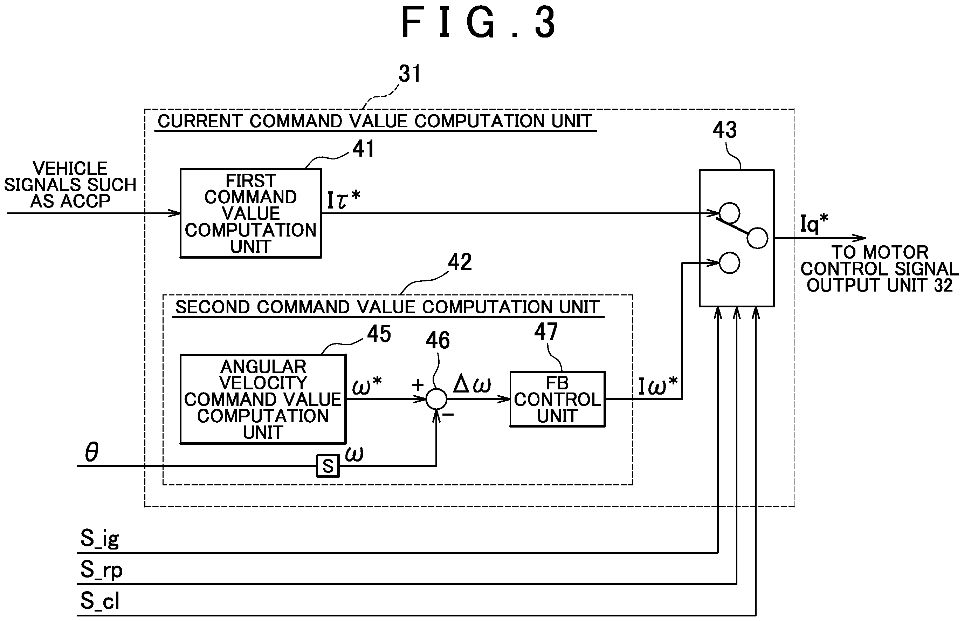

As illustrated in FIG. 3, a first command value computation unit 41 is provided in the current command value computation unit 31, and the vehicle signals such as the accelerator position signal ACCP are input into the first command value computation unit 41. The first command value computation unit 41 computes a first command value Iτ* corresponding to target torque based on the vehicle signals such as the accelerator position signal ACCP. A second command value computation unit 42 and a switching control unit 43, both of which will be described later, are provided in the current command value computation unit 31. When the ignition signal S_ig indicates that the ignition switch is in the on-state, the first command value Iτ* is output to the motor control signal output unit 32 as the q-axis current command value Iq* in a two-phase rotating coordinate system (a d-q coordinate system) that rotates in accordance with the rotation angle θ. Note that, a d-axis current command value Id* is fixed at zero (Id* = 0).

As illustrated in FIG. 2, the three-phase phase current values Iu, Iv, Iw and the rotation angle θ are input into the motor control signal output unit 32 along with the q-axis current command value Iq* computed by the current command value computation unit 31. The motor control signal output unit 32 executes current feedback control in the d-q coordinate system on the basis of the state quantities, thereby computing the motor control signal S_m that is output to the driving circuit 12.

Specifically, the three-phase current values Iu, Iv, Iw input into the motor control signal output unit 32 are input into a d-q conversion unit 33. The d-q conversion unit 33 computes a d-axis current value Id and a q-axis current value Iq by mapping the three-phase current values Iu, Iv, Iw onto the d-q coordinates on the basis of the rotation angle θ. Subsequently, the q-axis current value Iq is input into a subtracter 34q along with the q-axis current command value Iq* received from the current command value computation unit 31, and the d-axis current value Id is input into a subtracter 34d along with the d-axis current command value Id*. Then, the subtracters 34d, 34q compute a d-axis current deviation ΔId and a q-axis current deviation ΔIq, respectively.

The d-axis current deviation ΔId and the q-axis current deviation ΔIq are input into feedback (FB) control units 35d, 35q, respectively. The FB control units 35d, 35q compute a d-axis voltage command value Vd* and a q-axis voltage command value Vq* by multiplying the d-axis current deviation ΔId and the q-axis current deviation ΔIq by prescribed corresponding gains so as to cause the d-axis current value Id and the q-axis current value Iq, which are the actual current values, to follow the d-axis current command value Id* and the q-axis current command value Iq*, respectively.

The d-axis voltage command value Vd* and the q-axis voltage command value Vq* are input into a d-q reverse conversion unit 36 along with the rotation angle θ. The d-q reverse conversion unit 36 compute three-phase voltage command values Vu*, Vv*, Vw* by mapping the d-axis voltage command value Vd* and the q-axis voltage command value Vq* onto the three-phase alternating-current coordinates on the basis of the rotation angle θ. Subsequently, the three-phase voltage command values Vu*, Vv*, Vw* are input into a PWM conversion unit 37. The PWM conversion unit 37 computes duty command values based on the three-phase voltage command values Vu*, Vv*, Vw*, generates the motor control signal S_m having an on-duty ratio indicated by each duty command value, and outputs the motor control signal S_m to the driving circuit 12. In this way, driving electric power based on the motor control signal S_m is output to the motor 2, and motor torque corresponding to the driving electric power is transmitted to the wheel 4 via the clutch 3.

The ignition signal S_ig and the capacitor voltage Vc detected by the voltage sensor 19 (refer to FIG. 1) are input into the relay control unit 22. When the ignition signal S_ig indicates that the ignition switch is in the on-state, the relay control unit 22 outputs the relay control signals S_rs, S_rp such that the control relay 14a and the driving relay 16 are turned on (brought into the on-operation). On the other hand, when the ignition signal S_ig indicates that the ignition switch is in the off-state, the relay control unit 22 first outputs the relay control signal S_rp such that the driving relay 16 is turned off (brought into the off-operation). Then, when the capacitor voltage Vc becomes less than or equal to a prescribed capacitor voltage Vcth set in advance, the relay control unit 22 outputs the relay control signal S_rs such that the control relay 14a is turned off (brought into the off-operation).

The ignition signal S_ig is input into the clutch control unit 23. When the ignition signal S_ig indicates that the ignition switch is in the on-state, the clutch control unit 23 outputs the clutch control signal S_cl such that the clutch 3 is engaged. On the other hand, when the ignition signal S_ig indicates that the ignition switch is in the off-state, the clutch control unit 23 outputs the clutch control signal S_cl such that the clutch 3 is disengaged.

When the ignition switch is turned off by a driver to stop the supply of driving electric power to the motor 2, the microcomputer 11 carries out electric discharge from the capacitor C by supplying the electric power, which is generated by electric charges stored in the capacitor C, to the motor 2 such that torque is generated (without setting the q-axis current command value Iq* to zero). At this time, the microcomputer 11 in the present embodiment controls the electric power that is supplied to the motor 2 such that an angular velocity ω of the motor 2 becomes less than or equal to a prescribed angular velocity ωth. Note that, the prescribed angular velocity ωth is set less than or equal to the maximum angular velocity at which the motor 2 is able to rotate with the clutch 3 engaged, and set to be an angular velocity sufficiently smaller than the maximum angular velocity at which the motor 2 is able to rotate with the clutch 3 disengaged, that is, with no load placed on the motor 2.

Specifically, as illustrated in FIG. 3, in addition to the first command value computation unit 41, the second command value computation unit 42 and the switching control unit 43 are provided in the current command value computation unit 31, and an angular velocity command value computation unit 45 that computes an angular velocity command value ω* that is a target angular velocity of the motor 2 is provided in the second command value computation unit 42. The second command value computation unit 42 computes a second command value Iω*, which is a target value of the electric power supply to the motor 2 at the time of electric discharge from the capacitor C, by executing velocity feedback control so as to cause the angular velocity ω of the motor 2 to follow the angular velocity command value ω* computed by the angular velocity command value computation unit 45.

Specifically, the angular velocity command value computation unit 45 outputs a value less than or equal to the prescribed angular velocity ωth to a subtracter 46 as the angular velocity command value ω*. The angular velocity (rotation angular velocity) ω of the motor 2, which is obtained by differentiating the rotation angle θ detected by the rotation angle sensor 18 (refer to FIG. 1), is input into the subtracter 46 along with the angular velocity command value ω*. In the present embodiment, the microcomputer 11 and the rotation angle sensor 18 constitute an angular velocity detector. The subtracter 46 computes an angular velocity deviation Δω that is a deviation (difference) between the angular velocity command value ω* and the angular velocity ω, and outputs the angular velocity deviation Δω to a feedback (FB) control unit 47. The FB control unit 47 computes the second command value Iω* by multiplying the angular velocity deviation Δω by a prescribed gain so as to cause the angular velocity ω to follow the angular velocity command value ω*, and outputs the second command value Iω* to the switching control unit 43.

The ignition signal S_ig, the relay control signal S_rp, and the clutch control signal S_cl are input into the switching control unit 43. When the ignition signal S_ig indicates that the ignition switch is in the on-state, the switching control unit 43 outputs the first command value Iτ* as the q-axis current command value Iq*. On the other hand, when the ignition signal S_ig indicates that the ignition switch is in the off-state, the driving relay 16 is turned off according to the relay control signal S_rp, and the clutch 3 is disengaged according to the clutch control signal S_cl, the switching control unit 43 outputs the second command value Iω* as the q-axis current command value Iq*. In this way, when electric discharge from the capacitor C is carried out, the q-axis current command value Iq* that makes the angular velocity ω of the motor 2 less than or equal to the prescribed angular velocity ωth is output to the motor control signal output unit 32.

The operation of the present embodiment will be described below. When the ignition switch is turned off by a driver, the control relay 14b and the driving relay 16 are turned off and the clutch 3 is disengaged. Further, the motor control signal S_m based on the q-axis current command value Iq* (the second command value Iω*) that makes the angular velocity ω of the motor 2 less than or equal to the prescribed angular velocity ωth is output from the microcomputer 11 to the driving circuit 12. In this way, the electric power generated by the electric charges stored in the capacitor C is controlled and supplied to the motor 2 such that torque is generated and the angular velocity ω becomes less than or equal to the prescribed angular velocity ωth, and electric discharge from the capacitor C is carried out. When the capacitor voltage Vc becomes less than or equal to the prescribed capacitor voltage Vcth, the control relay 14a is turned off and the electric power supply to the microcomputer 11 is stopped. As a result, the motor control unit 1 is shut down.

The advantageous effects of the present embodiment will be described. Because the electric power generated by the electric charges stored in the capacitor C is supplied to the motor 2 such that torque is generated, it is possible to carry out electric discharge from the capacitor C while suppressing resistance heating. In the present embodiment, when electric discharge from the capacitor C is carried out, the angular velocity ω of the motor 2 is controlled so as to become less than or equal to the prescribed angular velocity ωth. Therefore, even if electric power is supplied to the motor 2 with torque transmission between the motor 2 and the wheel 4 interrupted, the motor 2 is prevented from rotating an excessively high angular velocity ω. In this way, it is possible to prevent an excessive burden from being placed on the motor 2 itself and its peripheral components such as a bearing.

The embodiment described above may be modified as follows. In the embodiment described above, the velocity feedback control is executed. Thus, when electric discharge from the capacitor C is carried out, electric power is supplied to the motor 2 such that the angular velocity ω of the motor 2 becomes less than or equal to the prescribed angular velocity ωth. However, the invention is not limited to this. For example, on the basis the fact that the angular velocity ω of the motor 2 is proportional to the voltage applied to the motor 2, when electric discharge from the capacitor C is carried out, the angular velocity ω of the motor 2 may be made less than or equal to the prescribed angular velocity ωth by supplying electric power to the motor 2 with, for example, the three-phase voltage command values Vu*, Vv*, Vw* fixed at values less than or equal to a prescribed voltage (voltage at which the angular velocity ω of the motor 2 becomes less than or equal to the prescribed angular velocity ωth). Note that, in this case, the rotation angle θ (the angular velocity ω) of the motor 2 need not be detected.

In the embodiment described above, a relay sensor that detects the on-off state of the driving relay 16 may be provided and a determination that the driving relay 16 is in the off-state, which is made based on a signal from the relay sensor, may be added to the conditions under which the switching control unit 43 outputs the second command value Iω* as the q-axis current command value Iq*. A clutch sensor that detects the state of the clutch 3 may be provided and a determination that the clutch 3 is disengaged, which is made based on a signal from the clutch sensor, may be added to the conditions under which the switching control unit 43 outputs the second command value Iω* as the q-axis current command value Iq*.

In the embodiment described above, the microcomputer 11 includes the relay control unit 22. However, the invention is not limited to this. For example, a control unit that controls the operations of the control relay 14a and the driving relay 16 may be provided in addition to the motor control unit 1, and the microcomputer 11 may include no relay control unit 22. Similarly, a control unit that controls the operation of the clutch 3 may be provided in addition to the motor control unit 1, and the microcomputer 11 may include no clutch control unit 23. In these cases, a determination that the driving relay 16 is in the off-state, which is made based on a signal from the relay sensor, or a determination that the clutch 3 is disengaged, which is made based on a signal from the clutch sensor, may be added to the conditions under which the switching control unit 43 outputs the second command value Iω* as the q-axis current command value Iq*.

In the embodiment described above, a mechanical relay is used as the driving relay 16 that serves as a switch. However, the invention is not limited to this. For example, a switching element such as a FET (field effect transistor) may be used as the driving relay 16. Similarly, a switching element such as a FET may be used as each of the control relays 14a, 14b.

In the embodiment described above, a brushless motor is used as the motor 2. However, the invention is not limited to this. For example, a direct-current motor with a brush may be used as the motor 2. In the embodiment described above, the operation of the motor 2 connected to the wheel 4 is controlled by the motor control unit 1. However, the invention is not limited to this. The operation of a motor for other uses may be controlled by the motor control unit 1.

Next, the technical concept that is understood from the embodiment described above and the modified examples will be described below. There is provided a motor control unit in which a control circuit supplies electric power to a motor such that an angular velocity of the motor becomes less than or equal to a prescribed angular velocity, by executing velocity feedback control so as to cause the angular velocity of the motor that is detected by an angular velocity detector to follow a target angular velocity.

There is provided the motor control unit in which the control circuit supplies electric power to the motor such that the angular velocity of the motor becomes less than or equal to the prescribed angular velocity, by making a voltage that is applied to the motor less than or equal to a prescribed voltage.

A motor control unit (1) controls an operation of a motor (2) connected to a wheel (4) via a clutch (3) that allows or interrupts torque transmission between the motor (2) and the wheel (4). The motor control unit (1) includes: a microcomputer (11) that outputs a motor control signal S_m; a driving circuit (12) that supplies driving electric power to the motor (2) based on the motor control signal S_m; and a capacitor (C) provided at an intermediate portion of a power supply line (Lp) that connects the driving circuit (12) and a driving power supply (15) to each other. The microcomputer (11) carries out electric discharge from the capacitor (C) by supplying electric power generated by electric charges stored in the capacitor (C) to the motor (2) such that torque is generated by the motor (2) and an angular velocity of the motor (2) becomes less than or equal to a prescribed angular velocity, with torque transmission between the motor (2) and the wheel (4) interrupted by the clutch (3), after a driving relay (16) is turned off.

## Claims

1. A motor control unit that controls an operation of a motor (**2**), comprising:
a control circuit (**11**) that outputs a motor control signal for controlling the operation of the motor (**2**);
a driving circuit (**12**) that supplies driving electric power to the motor (**2**) based on the motor control signal; and
a capacitor (**C**) provided at an intermediate portion of a power supply line (**Lp**) that connects the driving circuit (**12**) and an external power supply (**15**) to each other,
wherein the motor (**2**) is connected to a driven body (**4**) via a clutch (**3**) that allows or interrupts torque transmission between the motor (**2**) and the driven body (**4**),
the control circuit (**11**) carries out electric discharge from the capacitor (**C**) by supplying electric power generated by electric charges stored in the capacitor (**C**) to the motor (**2**) such that torque is generated by the motor (**2**), with torque transmission between the motor (**2**) and the driven body (**4**) interrupted by the clutch (**3**), after a switch (**16**) provided at an intermediate portion of the power supply line (**Lp**) is turned off, and
the control circuit (**11**) controls electric power supply to the motor (**2**) such that an angular velocity of the motor (**2**) becomes less than or equal to a prescribed angular velocity, at the time of the electric discharge from the capacitor (**C**).

## Patentansprüche

1. Motorsteuerungseinheit, die einen Betrieb eines Motors (**2**) steuert, mit:
einer Steuerungsschaltung (**11**), die ein Motorsteuerungssignal zur Steuerung des Betriebs des Motors (**2**) ausgibt,
einer Antriebsschaltung (**12**), die dem Motor (**2**) auf der Grundlage des Motorsteuerungssignals elektrische Antriebsleistung zuführt, und
einem Kondensator (**C**), der an einem Zwischenabschnitt einer Leistungszufuhrleitung (**Lp**) vorgesehen ist, die die Antriebsschaltung (**12**) und eine externe Leistungsversorgung (**15**) miteinander verbindet,
wobei
der Motor (**2**) mit einem angetriebenen Körper (**2**) über eine Kupplung (**3**) verbunden ist, die eine Drehmomentübertragung zwischen dem Motor (**2**) und dem angetriebenen Körper (**4**) erlaubt oder unterbricht,
die Steuerungsschaltung (**11**) ein elektrisches Entladen aus dem Kondensator (**C**) durch Zufuhr elektrischer Leistung, die durch in dem Kondensator (**C**) gespeicherte elektrische Ladungen erzeugt wird, zu dem Motor (**2**) derart ausführt, dass ein Drehmoment durch den Motor (**2**) erzeugt wird, wobei die Drehmomentübertragung zwischen dem Motor (**2**) und dem angetriebenen Körper (**4**) durch die Kupplung (**3**) unterbrochen ist, nachdem ein an einem Zwischenabschnitt der Leitungsleitung (**Lp**) vorgesehener Schalter (**16**) ausgeschaltet ist, und
die Steuerungsschaltung (**11**) während des elektrischen Entladens aus dem Kondensator (**C**) die elektrische Leistungszufuhr zu dem Motor (**2**) derart steuert, dass eine Winkelgeschwindigkeit des Motors (**2**) kleiner als oder gleich wie eine vorgegebene Winkelgeschwindigkeit wird.

## Revendications

1. Unité de commande de moteur qui contrôle le fonctionnement d'un moteur (2), comprenant :
un circuit de commande (11) qui délivre un signal de commande de moteur destiné à contrôler le fonctionnement du moteur (2) ;
un circuit d'excitation (12) qui fournit une énergie électrique d'excitation au moteur (2) sur la base du signal de commande de moteur ; et
un condensateur (C) prévu au niveau d'une partie intermédiaire d'une ligne d'alimentation électrique (Lp) qui relie le circuit d'excitation (12) et une alimentation électrique externe (15) l'un à l'autre,
dans laquelle le moteur (2) est relié à un corps entraîné (4) via un embrayage (3) qui permet ou interrompt la transmission de couple entre le moteur (2) et le corps entraîné (4),
le circuit de commande (11) achemine une décharge électrique entre le condensateur (C), en fournissant l'énergie électrique générée par les charges électriques stockées dans le condensateur (C), et le moteur (2) de sorte qu'un couple soit généré par le moteur (2), avec la transmission de couple entre le moteur (2) et le corps entraîné (4) interrompue par l'embrayage (3), après qu'un commutateur (16) prévu au niveau d'une partie intermédiaire de la ligne d'alimentation électrique (Lp) a été placé en position OFF, et
le circuit de commande (11) contrôle l'alimentation en énergie électrique du moteur (2) de sorte qu'une vitesse angulaire du moteur (2) devienne inférieure ou égale à une vitesse angulaire prescrite, au moment de la décharge électrique par le condensateur (C).
